# FASCICULE DE BREVET EUROPEEN

(11) **EP 0 684 533 B1**
(45) Date de publication et mention de la délivrance du brevet: **15.01.1997**
(21) Numéro de dépôt: 95470016.7
(22) Date de dépôt: 19.04.1995
(51) Int. Cl.: G05B 19/042

(54) **Processeur contrôleur/ contrôlé pour gestion de protocole de communication**
Master/Slave Prozessor für die Übertragungsprotokollverwaltung
Processor master/slave for the management of a communication protocol

(30) Priorité: 28.04.1994 FR 9405354
(43) Date de publication de la demande: 29.11.1995
(73) Titulaire: SGS-THOMSON MICROELECTRONICS S.A., 94250 Gentilly (FR)
(72) Inventeur: Le Van Suu, Maurice, F-57000 Metz (FR)
(74) Mandataire: Schmit, Christian Norbert Marie

(56) Documents cités:
- EP-A- 0 320 390
- EP-A- 0 562 333
- FR-A- 2 371 005
- MICROELECTRONIC PRODUCTS DATA BOOK, 1 Mars 1985, MITEL SEMICONDUCTOR, pp. 2-61-2-71
- IEEE TRANSACTIONS ON CONSUMER ELECTRONICS, vol. CE-32, no. 1, Février 1986, New York, US, pp. 9-18, HAMABE RYUJI et al.: 'Home Bus System (HBS) Interface LSI and its Standard Protocol Example'

## Description

L'invention concerne un processeur dédié à la gestion d'un protocole de communication dans un réseau d'appareils répartis le long d'une ligne de transmission d'informations, fonctionnellement distingués en appareils contrôleurs d'une part, et en appareil contrôlés d'autre part.

L'invention trouve une application particulièrement avantageuse, mais non exclusive, dans le domaine de la gestion informatique d'installations domestiques, connu également sous le nom de domotique.

Les réseaux domotiques informatisés comprennent en général une pluralité d'appareils répartis sur une ligne de transmission d'information (comme le courant porteur, les câbles coaxiaux, les paires torsadées, le rayonnement infrarouge, etc). Ces appareils peuvent être des appareils domestiques proprement dits, tels que téléviseur, réfrigérateur, machine à laver, radiateur, etc., des capteurs (de température par exemple), ou encore une ou plusieurs stations de contrôle destinées à recevoir des instructions ou des informations relatives au fonctionnement des autres appareils. Ces instructions sont par exemple des ordres d'arrêt ou de marche provenant d'un utilisateur. A leur tour, la ou les stations de contrôle adressent aux autres appareils de l'installation des ordres de commande sous la forme d'un message permettant notamment d'obtenir les modifications de fonctionnement désirées. Par exemple, après avoir reçu une information d'un capteur de température, une station de contrôle va comparer cette information à une consigne de l'utilisateur et éventuellement envoyer des commandes de mise en marche ou d'arrêt à des radiateurs, suivant le résultat de la comparaison.

Dans un réseau domotique, on peut distinguer fonctionnellement les appareils en contrôleurs et en contrôlés.

Les appareils contrôleur sont capables de recevoir des informations d'un ou plusieurs appareils, et de leur envoyer des signaux de commande, ceux-ci modifiant par exemple le fonctionnement de ces appareils.

Les appareils contrôlés ne sont capables d'envoyer que des informations (par exemple la température d'une pièce) mais non pas de modifier le fonctionnement d'un autre appareil (par exemple un radiateur) de manière autonome. Typiquement, les appareils contrôlés sont des appareils domestiques ou des capteurs, alors que les appareils contrôleurs sont des appareils spécifiquement dédiés à la gestion du réseau domotique (au sens du pilotage des appareils contrôlés) suivant des instructions données par l'utilisateur.

Comme on s'intéresse aux réseaux domestiques informatisés dans lesquels des informations sont échangées entre des appareils, il faut que ces appareils soient pourvus de moyens spécifiques programmables de manière à gérer la transmission, la réception et décodage des informations échangées. Typiquement cela se fait grâce à des circuits comprenant au moins un processeur et une ou des mémoires contenant des programmes que met en oeuvre ce processeur.

De tels processeurs mettent en oeuvre deux types de programmes fonctionnellement distincts, d'une part des programmes de gestion de réseau, et d'autre part des programmes applicatifs dépendant de l'appareil concerné et de son fonctionnement. Typiquement, les programmes de gestion de réseau sont des programmes concernant la reconnaissance et la mise en forme de messages à recevoir ou à transmettre sur le réseau. Ils servent donc à exécuter des tâches protocolaires (liées au protocole d'échange qu'utilisent les appareils sur le réseau) telles que codage et décodage de bits, calcul de code correcteur d'erreurs, gestion de collision, etc., dépendant de la structure formelle des messages échangés. les programmes applicatifs concernent d'un point de vue général, l'utilisation qui est faîte des informations échangées. Ils sont dépendants du type d'appareil les mettant en oeuvre et donc concernent l'aspect fonctionnel de celui-ci.

D'un point de vue développement des programmes, les programmes de gestion de réseau intéressent plus particulièrement les fabricants de processeurs amenés à être utilisés dans les appareils d'un réseau, alors que les programmes applicatifs intéressent plus particulièrement les équipementiers (fabricants d'appareils), intégrant dans leurs produits ces processeurs.

De manière à faciliter le travail de développement des équipementiers, les fabricants de processeurs s'orientent vers l'intégration de programmes de gestion de réseau spécifiquement dédiés à la gestion de réseaux domotiques, et non pas seulement à la gestion de tâches protocolaires.

En effet, chaque type d'appareil domestique propose généralement des fonctionnalités identiques d'un appareil à l'autre. Par exemple, une machine à laver peut être caractérisée par un certain nombre de programmes de lavage, chaque programme étant défini par un temps de lavage, une température de lavage etc. Dans un réseau domotique, quel que soit l'équipementier ayant fabriqué un appareil d'un type donné, cet appareil sera amené à mettre en oeuvre des processus identiques à ceux d'appareils concurrents de même type.

Dans cette optique, un fabricant de processeurs aura commercialement tout intérêt à proposer des programmes de gestion de réseau orientés vers les applications prévisibles qui seront faîtes de ses produits. A titre d'exemple, une sonde de température pourra soit mesurer la température sur demande d'une station de contrôle, soit mesurer périodiquement la température, stocker l'information dans une mémoire de travail, et fournir cette information ultérieurement, de manière automatique ou sur requête d'une station de contrôle. Un équipementier fabricant de sondes sera sans doute plus intéressé par un processeur contenant déjà en mémoire des programmes mis en oeuvre dans ce type de fonctionnement, son développement de programme applicatif se limitant à énumérer le type de fonctionnement désiré. De même, du point de vue du réseau, un fabricant de processeurs aura intérêt à proposer un produit qui contienne des programmes permettant la reconnaissance du type d'appareil utilisé (par l'envoi, au moment de la connexion de l'appareil au réseau, par celui-ci, d'un message de demande de prise en charge par une station de contrôle).

Ainsi, notre fabricant de sonde n'aura pas à s'inquiéter de la programmation de fonctions de demande de prise en charge, etc., qui ne sont pas liés au fonctionnement de la sonde proprement dit.

Afin de minimiser le nombre de processeurs différenciés par des programmes de gestion distincts, les fabricants de processeurs proposent donc des processeurs de type contrôleur ou contrôlé pouvant mettre en oeuvre divers types d'applications (gestion de lumière, de chauffage etc.). Un équipementier choisira ainsi par exemple un processeur de type contrôleur pour l'implanter dans une station de contrôle de chauffage, et sa programmation consistera, en simplifiant, à indiquer que l'appareil concerne une installation de chauffage.

Jusqu'à maintenant, pour restreindre le prix des processeurs, on trouvait des processeurs de type contrôleur ou contrôlé. En effet, un appareil de type contrôlé n'étant pas destiné à envoyer des messages de commande il n'est pas nécessaire d'intégrer dans ses mémoires des programmes permettant par exemple de stocker des informations reçues de stations de contrôle, ou les adresses des autres appareils de même type présents sur le réseau. De ce fait, cela induit en pratique que les tailles des mémoires associées aux processeurs destinés aux appareils contrôlés sont plus réduites que celles de ceux destinés aux appareils contrôleurs. Il était donc économiquement préférable de distinguer le type d'appareil, contrôleur ou contrôlé, auquel était destiné un processeur en développement.

On s'est aperçu que cela posait deux inconvénients.

Premièrement, afin de développer le rayonnement de protocoles d'échange, on a vu se développer une activité de normalisation de façon à assurer l'interopérabilité et la compatibilité des appareils destinés à opérer sur un type de réseau, indépendamment des fabricants de ces appareils. La distinction contrôleur-contrôlé oblige donc les fabricants de processeurs à procéder à deux certifications (vérification de respect de la norme) pour odes processeurs finalement assez proches, puisqu'en pratique seul le contenu de mémoires va les différencier. Deuxièmement, un fabricant de processeur différenciés en contrôleurs-contrôlés ne pourra pas optimiser sa production, au mieux, car il ne sera jamais sûr du nombre exact de processeurs pour appareil contrôleur et de processeurs pour appareils contrôlés que pourront lui commander des équipementiers.

EP-A-0 320 390 propose un système de télécommande domotique. Il est précisé que les programmes des émetteurs et récepteurs sont différent.

IEEE transactions on consumer electronics, vol.CE-32, no.1, Février 1986 NEW YORK, US, pages 9-18, Hamabe Ryuji et al. 'Home Bus System (HBS) Interface LSI and its Standard Protocol Example ' propose une interface de réseau domotique. Cette interface peut être configurée suivant trois modes de fonctionnement selon le type d'appareil auquel elle est reliée.

Le but de la présente invention et de proposer un processeur, implanté dans un appareil, dédié la gestion d'un protocole de communication dans un réseau d'appareils répartis le long d'une ligne de transmission d'informations ; les appareils étant fonctionnellement distingués en contrôleurs et en contrôlés ; le processeur mettant en oeuvre des programmes compris dans une mémoire associée, ces programmes étant fonctionnellement distingués en programmes applicatifs et en programmes de gestion de réseau,
caractérisé en ce que :
- les programmes de gestion de réseau sont toujours différents suivant que les appareils sont de type contrôleur ou de type contrôlé,
- la mémoire comprend à la fois les programmes de gestion de réseau associés aux appareils de type contrôleur et aux appareils de type contrôlé,
- et en ce que le processeur est muni de moyens de sélection pour mettre sélectivement en oeuvre les programmes de gestion de réseau associés aux appareils de type contrôleur ou aux appareils de type contrôlé.

L'invention propose donc de ne développer qu'un seul type de processeur intégrant les fonctionnalités propres aux applications de type contrôleur et aux applications de type contrôlés, la différentiation étant laissée aux équipementiers.

La description qui va suivre, en regard des dessins annexés, donnés à titre d'exemples non limitatifs, fera bien comprendre en quoi consiste l'invention et comment elle peut être réalisée.

La figure 1 est un schéma représentant une installation comprenant un système de transmission de données, entre une station de contrôle (appareil de type contrôleur) et plusieurs appareils (de type contrôlés) répartis sur une ligne de courant porteur.

La figure 2 est un schéma de la station de contrôle de la figure 1.

La figure 3 est un schéma d'un appareil de type contrôlé de la figure 1.

La figure 4 donne la composition typique d'un message transmis entre les différents organes de l'installation de la figure 1.

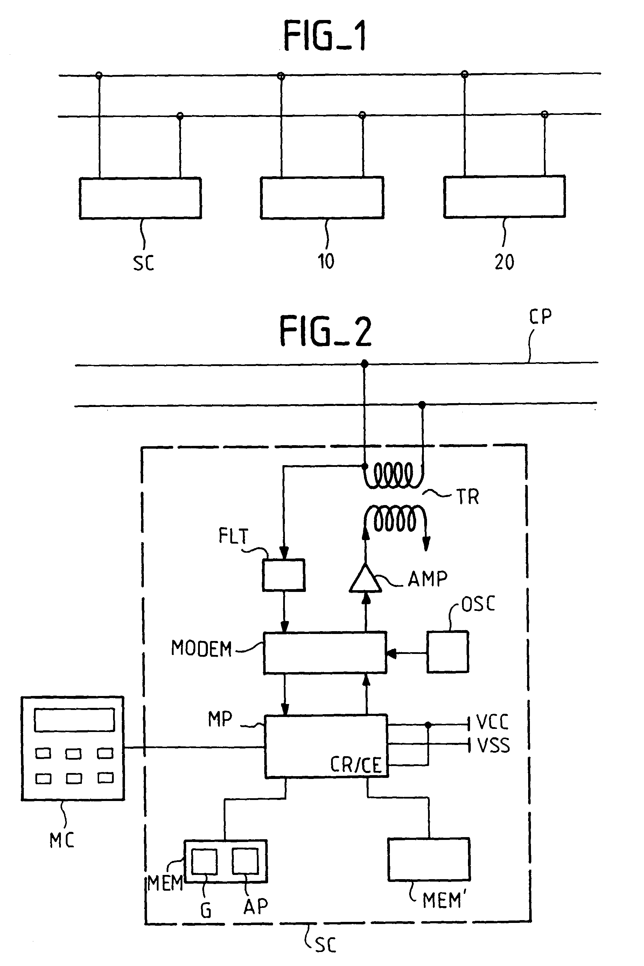

La figure 1 montre de manière schématique un système de transmissions de données dans une installation domestique comprenant une pluralité d'appareils SC, 10, 20 répartis sur un support de transmissions d'informations, ici le courant porteur CP. La transmission des données entre les différents organes se fait donc uniquement à travers le réseau de distribution d'énergie. Si une ligne de transmission réservée à la circulation d'informations existait, elle pourrait tout aussi bien être utilisée à cette fin.

Les appareils constitués par la station de contrôle SC et les appareils 10, 20 sont aptes à recevoir et émettre des données, les données étant transmises par une double modulation de fréquence d'une fréquence porteuse donnée, les informations binaires 0 et 1 étant représentées par exemple par la présence respective d'une première fréquence de modulation de 132 kHz et d'une deuxième fréquence de modulation de 133 kHz.

La constitution générale de la station de contrôle SC est donnée sur la figure 2. La station comprend de préférence un circuit à processeur pour émettre des signaux de commande et pour recevoir et traiter les signaux reçus. Ce circuit comporte ses propres programmes de fonctionnement, qui sont contrôlés par l'utilisateur par exemple par l'intermédiaire d'une console MC comprenant un clavier de commande et un écran de contrôle. On peut aussi prévoir que le circuit à processeur est contrôlé par un micro-ordinateur personnel, l'utilisateur pouvant alors définir à volonté des programmes de fonctionnement du processeur.

Outre un processeur MP, ses mémoires de programmes MEM et de travail MEM', le circuit comporte les moyens nécessaires pour établir les signaux à transmettre sur le courant porteur CP. Ces moyens comportent de préférence un oscillateur OSC pour établir une fréquence porteuse. La sortie de l'oscillateur est appliquée, à travers un modulateur / démodulateur MODEM, à un amplificateur AMP, et la sortie de l'amplificateur AMP est appliquée au primaire d'un transformateur TR dont le secondaire est connecté au réseau de distribution électrique du courant porteur CP.

Les informations qui viennent du courant porteur CP et qui sont destinées à la station de contrôle SC arrivent par le transformateur TR. Elles sont transmises à une cellule de filtrage permettant de détecter la présence d'une modulation sur le réseau. La sortie de la cellule de filtrage est reliée au MODEM et mise en forme. La sortie de ce circuit est reliée au processeur MP. Les signaux reçus du réseau des autres appareils de l'installation sont démodulés et transformés en successions d'impulsions binaires qui sont exploitables par le processeur MP.

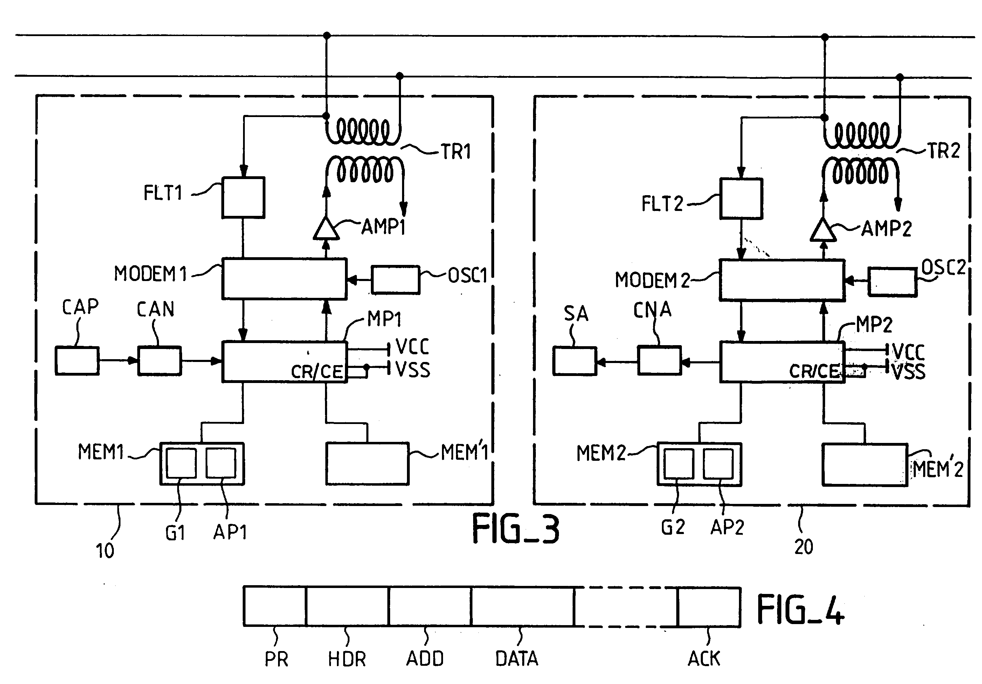

Sur la figure 3, on a représenté la constitution générale des appareils 10 et 20. Leur constitution est pratiquement identique à celle représente à la figure 2, mais les appareils 10 et 20 ne sont pas contrôlés par un clavier et un écran.

Dans un exemple, on pourra supposer que l'appareil 10 est une sonde de température, que l'appareil 20 est un radiateur, et que la station de contrôle SC est destinée à contrôler le chauffage de l'installation domestique.

L'appareil 10 comprend ainsi un processeur MP1 avec des mémoires de programmes MEM1 et de travail MEM'1 permettant d'une part d'exécuter des opérations prédéterminées sous la commande des signaux reçus de la station de contrôle SC par le biais du courant porteur CP, ses opérations prédéterminées étant contenus dans la mémoire de programmes MEM1, et d'autre part de stocker, dans la mémoire de travail MEM'1, des informations reçues d'un capteur de température CAP par le biais d'un convertisseur CAN. Il comprend également un transformateur TR1 par lequel peuvent être transférés vers les réseaux ou reçus du réseau des signaux de modulation de la fréquence porteuse. Il comprend également les moyens de modulation, de filtrage et de démodulation nécessaires pour la conversion de ces signaux dans une forme utilisable par le processeur OSC1, MODEM1, AMP1, FLT1, exactement comme dans le circuit de la station SC.

L'appareil 20 comprend ainsi un processeur MP2 avec des mémoires de programmes MEM2 et de travail MEM'2. L'appareil 20 pourra ainsi envoyer par exemple des signaux de commande à une source d'alimentation variable d'une résistance (radiateur électrique) par le biais d'un convertisseur CNA. Il comprend également un transformateur TR2 par lequel peuvent être transférés vers les réseaux ou reçus du réseau des signaux de modulation de la fréquence porteuse. Il comprend également les moyens de modulation, de filtrage et de démodulation nécessaires pour la conservation de ces signaux dans un forme utilisable par le processeur OSC2, MODEM2, AMP2, FLT2, exactement comme dans le circuit de la station SC.

La figure 4 représente la structure générale d'un message transmis par un appareil sur le réseau, avec notamment un préambule PR, un en-tête HDR, un zone ADD d'adresses comportant l'adresse de l'émetteur du message et celle, ou celles, des destinataires, une zone DATA de données, et éventuellement un zone ACK d'acquittement dans laquelle l'émetteur indique s'il désire ou non recevoir un message d'acquittement en réponse au message émis.

En ce qui concerne les mémoires associées aux processeurs des appareils SC, 10, 20, on a distingué d'une part des mémoires de programmes, et d'autre part des mémoires de travail. Bien entendu, ces mémoires pourront être physiquement une seule et même mémoire, la différence entre mémoire de programmes et mémoire de travail étant alors représentée par des zones d'adressage déterminées de manière distincte.

Les mémoires de programmes contiennent des programmes fonctionnellement distinguées en programmes de gestion de réseau (G, G1, G2 ) et en programmes applicatifs (AP, AP1, AP2).

En pratique, les programmes de gestion de réseau seront contenus dans des mémoires de type masqué, c'est-à-dire non accessibles aux équipementiers, de manière à assurer en permanence un respect du protocole d'échange mis en oeuvre dans ce réseau par les appareils du réseau.

Par contre, il est bien sûr évident qu'à l'opposé, les programmes applicatifs seront avantageusement programmés par les équipementiers et contenus dans une zone mémoire accessible en programmation de manière à permettre une mise au point de ceux-ci.

Dans l'exemple décrit, les processeurs des appareils SC, 10 et 20, sont munis chacun d'une broche de sélection CR/CE. Cette broche est destinée à recevoir un signal représentatif du type de l'appareil (contrôleur ou contrôlé). Les processeurs étant tous typiquement munis de deux broches d'alimentation, pour recevoir une tension positive VCC et une tension de masse VSS, on pourra par exemple distinguer les types d'appareils en connectant leur broches CR/CE à l'une ou l'autre de ces broches. Dans l'exemple décrit, si la broche CR/CE reçoit la tension VSS, c'est un appareil de type contrôlé, et si elle reçoit la tension VCC, c'est un appareil de type contrôleur. A la mise sous tension, le processeur de l'appareil SC, ou 10, ou 20, ira lire l'état de cette broche pour déterminer son type. On pourrait aussi réserver un espace des mémoires contenant les programmes applicatifs (AP, AP1, AP2) pour que l'équipementier stocke cette information, celle-ci étant lue à la mise sous tension.

Cette dernière solution présente l'avantage de ne pas nécessiter de broche spécifique dédiée à recevoir l'information relative au type d'un appareil, et donc de minimiser l'encombrement du processeur compris dans cet appareil.

## Revendications

1. Processeur (MP), implanté dans un appareil (SC), dédié à la gestion d'un protocole de communication dans un réseau d'appareils répartis le long d'une ligne de transmission d'informations (CP) ; les appareils étant fonctionnellement distingués en contrôleurs et en contrôlés ; le processeur mettant en oeuvre des programmes compris dans une mémoire de programmes associée (MEM), ces programmes étant fonctionnellement distingués en programmes de gestion de réseau (G) et en programmes applicatifs (AP),
caractérisé en ce que :
- les programmes de gestion de réseau sont toujours différents suivant que les appareils sont de type contrôleur ou de type contrôlé,
- la mémoire comprend à la fois les programmes de gestion de réseau associés aux appareils de type contrôleur et aux appareils de type contrôlé,
- et en ce que le processeur est muni de moyens de sélection pour mettre sélectivement en oeuvre les programmes de gestion de réseau associés aux appareils de type contrôleur ou aux appareils de type contrôlé.

2. Processeur suivant la revendication 1, caractérisé en ce que les programmes de gestion de réseau sont inscrits dans la mémoire de façon indélébile.

3. Processeur selon l'une des revendications 1 à 2, caractérisé en ce que les programmes applicatifs sont inscrits dans une partie de la mémoire accessible en écriture.

4. Processeur suivant l'une des revendications 1 à 3, caractérisé en ce que les appareils de type contrôlé peuvent envoyer des informations représentatives de leur état, et en ce que les appareils de type contrôleur peuvent envoyer des informations de commande pour modifier l'état d'un ou plusieurs appareils de type contrôlé et comportent des moyens pour stocker les informations envoyées par un ou plusieurs appareils de type contrôlé.

5. Processeur suivant l'une des revendications 1 à 4, caractérisé en ce qu'il comporte une broche de sélection (CR/CE) pour recevoir un signal représentatif du type de l'appareil.

6. Processeur suivant l'une des revendications 1 à 4, caractérisé en ce qu'un espace de la mémoire de programmes est réservé pour stocker une information représentative du type de l'appareil.

7. Processeur suivant l'une des revendications 1 à 6, caractérisé en ce qu'il est dédié à la gestion d'un protocole de communication dans un réseau domotique informatisé.

## Patentansprüche

1. Prozessor (MP), der in einem Gerät (SC) eingebaut ist, für die Verwaltung eines Kommunikationsprotokolls in einem Netz von Geräten, die entlang einer Übertragungslinie für Informationen (CP) verteilt sind; wobei die Geräte funktionell unterschieden werden in steuernde und gesteuerte; wobei der Prozessor Programme abarbeitet, die sich in einem assoziierten Programmspeicher (MEM) befinden, wobei die Programme funktionell unterschieden werden in Programme zur Verwaltung des Netzes (G) und in Applikationsprogramme (AP),
dadurch gekennzeichnet, daß:
- die Programme zur Verwaltung des Netzes sich unterscheiden, je nachdem ob die Geräte vom steuernden oder gesteuerten Typ sind,
- der Speicher gleichzeitig Programme zur Verwaltung des Netzes umfaßt, die mit Geräten vom steuernden Typ und mit Geräten vom gesteuerten Typ assoziiert sind,
- und dadurch, daß der Prozessor mit Auswahlvorrichtungen ausgestattet ist, um selektiv Programme zur Verwaltung des Netzes abzuarbeiten, die mit Geräten vom steuernden Typ oder Geräten vom gesteuerten Typ assoziiert sind.

2. Prozessor nach Anspruch 1, dadurch gekennzeichnet, daß die Programme zur Verwaltung des Netzes nicht löschbar in den Speicher geschrieben werden.

3. Prozessor nach einem der Ansprüche 1 und 2, dadurch gekennzeichnet, daß die Applikationsprogramme in einen beschreibbaren Teil des Speichers geschrieben werden.

4. Prozessor nach einem der Ansprüche 1 bis 3, dadurch gekennzeichnet, daß die Geräte vom gesteuerten Typ Informationen abschicken können, die ihren Zustand anzeigen, und dadurch, daß die Geräte vom steuernden Typ Informationen mit Befehlen zum Modifizieren des Zustands eines oder mehrerer Geräte vom gesteuerten Typ abschicken können und Vorrichtungen zum Speichern der von einem oder mehreren Geräten vom gesteuerten Typ abgeschickten Informationen umfassen.

5. Prozessor nach einem der Ansprüche 1 bis 4, dadurch gekennzeichnet, daß er einen Auswahlkontakt (CR/CE) zum Empfang eines für den Gerätetyp spezifischen Signals umfaßt.

6. Prozessor nach einem der Ansprüche 1 bis 4, dadurch gekennzeichnet, daß ein Bereich im Programmspeicher reserviert ist für das Speichern einer Information, die für den Gerätetyp spezifisch ist.

7. Prozessor nach einem der Ansprüche 1 bis 6, dadurch gekennzeichnet, daß er für die Verwaltung eines Kommunikationsprotokolls in einem lokalen Informationsnetz ausgelegt ist.

## Claims

1. Processor (MP), implanted in an item of equipment (SC), dedicated to the management of a communication protocol in a network of equipment distributed along a data transmission line (CP) ; the items of equipment being functionally distinguished as controllers and controlled; the processor using programs included in an associated program memory (MEM), these programs being functionally distinguished as network management programs (G) and application programs (AP),
characterised in that:
- the network management programs are always different depending on whether the items of equipment are of the controlling or controlled type,
- the memory comprises both the network management programs associated with the equipment of the controlling type and with the equipment of the controlled type,
- and in that the processor is provided with selection means for selectively using the network management programs associated with the equipment of the controlling type or with the equipment of the controlled type.

2. Processor according to Claim 1, characterised in that the network management programs are entered in the memory in an indelible fashion.

3. Processor according to one of Claims 1 to 2, characterised in that the application programs are entered in a part of the memory which is accessible by writing.

4. Processor according to one of Claims 1 to 3, characterised in that the items of equipment of the controlled type are able to send data representing their status, and in that the items of equipment of the controlling type are able to send control data for modifying the status of one or more items of equipment of the controlled type and including means for storing the data sent by one or more items of equipment of the controlled type.

5. Processor according to one of Claims 1 to 4, characterised in that it includes a selection pin (CR/CE) for receiving a signal representing the type of the equipment.

6. Processor according to one of Claims 1 to 4, characterised in that a space in the program memory is reserved for storing a data item representing the type of the equipment.

7. Processor according to one of Claims 1 to 6, characterised in that it is dedicated to the management of a communication protocol in a computerised home automation network.
